# EUROPÄISCHE PATENTSCHRIFT

(11) **EP 1 213 984 B1**
(45) Veröffentlichungstag und Bekanntmachung des Hinweises auf die Patenterteilung: **12.11.2003**
(21) Anmeldenummer: 00971280.3
(22) Anmeldetag: 19.09.2000
(51) Int. Cl.: A46B 13/00

(54) **WASCHEINRICHTUNG FÜR FAHRZEUGWASCHANLAGEN**
WASHING DEVICE FOR A CAR WASH UNIT
DISPOSITIF DE LAVAGE POUR SYSTEMES DE LAVAGE DE VEHICULES

(30) Priorität: 20.09.1999 DE 29916541 U
(43) Veröffentlichungstag der Anmeldung: 19.06.2002
(73) Patentinhaber: WashTec Holding GmbH, 86153 Augsburg (DE)
(72) Erfinder: WINDEL, Günter, 63825 Schöllkrippen (DE)
(74) Vertreter: Rapp, Bertram, Dr.
(86) Internationale Anmeldenummer: EP0009166
(87) Internationale Veröffentlichungsnummer: WO01021037

(56) Entgegenhaltungen:
- EP-A- 0 876 778
- DE-A- 19 646 783
- DE-U- 29 810 934
- US-A- 5 592 712

## Beschreibung

Die Erfindung betrifft eine rotierende oder umlaufende Wascheinrichtung, insbesondere eine Waschbürste für Fahrzeugwaschanlagen mit den Merkmalen im Oberbegriff des Hauptanspruchs.

Eine solche Waschbürste ist aus der US-A-4,377,878 bekannt Am Umfang *der* Waschbürstenwelle sind in Umfangsrichtung abwechselnd biegeweiche Waschelemente aus Filz und steife Borsten angeordnet. Die Borsten sind deutlich kürzer als die Waschelemente und dienen diesen als Stützelemente. Die Borsten nehmen dabei am Waschvorgang nicht teil und sind auch keine Waschelemente. Die Fahrzeugwäsche wird nur durch die biegeweichen Waschelemente aus Filz oder einem anderen Fasermaterial bewirkt. Derartige Waschelemente sind zwar für eine schonende Fahrzeugwäsche vorteilhaft, bringen aber andererseits keine optimale Reinigungswirkung.

Die DE-U-92 14 265 zeigt eine Waschbürste mit einer Mischung von borstenartigen härteren Waschelementen und streifenförmigen weicheren Waschelementen aus Faservlies. Die Waschbürste ist hierbei der Länge nach in mehrere Abschnitte unterteilt, wobei sich die unterschiedlichen Waschelemente in Axialrichtung der Waschbürste abwechseln. Am oberen und unteren Bereich der vertikalen Seitenbürste befinden sich Borsten, während im mittleren Bereich die weicheren Faservliesstreifen angeordnet sind. Die Borsten und die Faservliesstreifen haben dabei die gleiche Länge. Die Borsten besitzen eine hohe Reinigungskraft und sind in der Lage, auch festsitzenden Schmutz zu lösen und zu entfernen. Andererseits bringen sie aber die Gefahr von geringfügigen Beschädigungen der zu reinigenden Flächen mit sich.

Eine ähnliche Waschbürste ist aus der US-A-3,613,140 bekannt. Sie ist als horizontale Radwaschbürste ausgebildet und besteht aus unterschiedlichen Waschelementen, die sich in Material und Länge unterscheiden und die in Bürstenlängsrichtung abwechselnd angeordnet sind. Die längeren Waschelemente sollen die Innenseiten des Fahrzeugrades bzw. der Feige erreichen und bestehen aus einem weichen borstenfönnigen Material. Die kürzeren und ebenfalls borstenartigen Waschelemente sollen die außenliegenden Rad- und Felgenbereiche reinigen und sind härter bzw. steifer als die längeren Borsten Sie sollen aus Nylon oder Metalldraht bestehen.

Das DE-U-93 01 692 zeigt schließlich noch eine vertikale Seitenbürste, die ähnlich wie die vorgenannte Seitenbürste aus dem DE-U-92 14 265 ausgebildet ist. Auch hier hat die Seitenbürste im unteren Bereich nur Borsten und im oberen Bereich Textilstreifen, zudem kürzere Stützborsten angeordnet sein können. Die Borsten und Textilstreifen haben die gleiche Länge, wobei die Borsten für die Stützfunktion auch kurzer sein können.

Die EP-A-0876778 zeigt eine Wascheinrichtung für Fahrzeugwaschanlagen, welche Borsten unterschiedlicher Länge aufweist, wobei diese Borsten auch unterschiedliche Steifigkeiten haben.

Es besteht daher die Aufgabe, eine gattungsgemäße Wascheinrichtung so weiterzubilden, daß eine verbesserte und gründlichere Reinigung der Fahrzeuge ermöglicht wird.

Gelöst wird diese Aufgabe mit den kennzeichnenden Merkmalen des Anspruchs 1. Vorteilhafte Ausgestaltungen sind den Unteransprüchen entnehmbar.

Einzelheiten der Erfindung sind in der Zeichnung schematisch dargestellt. Es zeigen:
- Figur 1:: einen Vertikalschnitt durch eine Waschbürste mit in Umfangsrichtigung abwechselnd angeordneten borstenartigen Bündeln und streifenförmigen Waschelementen,
- Figur 2:: einen Vertikalschnitt durch eine vertikale Waschbürste mit im unteren Bereich verteilt angeordneten Borstenbündeln und streifenförmigen Waschelementen,
- Figur 3:: einen Querschnitt durch eine Waschbürste,
- Figur 4:: einen Längsschnitt durch einen Nutenring zur Aufnahme von Borstenbündeln und streifenförmigen Waschelementen,
- Figur 5:: eine Variante zu Figur 2 als Dachbürste mit Fahrzeug,
- Figur 6:: eine Variante der Verteilung und Befestigung der Waschelemente und
- Figur 7:: eine Draufsicht auf eine Befestigung gemäß Figur 6.

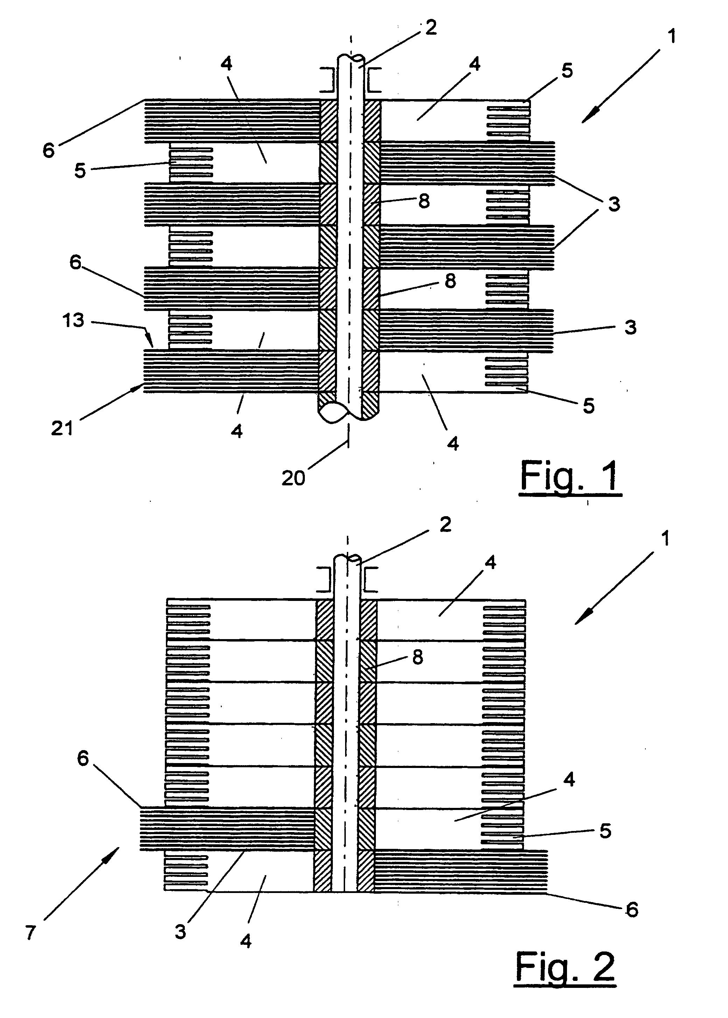

Im Beispiel der Figur 1 ist eine Wacheinrichtung (1) dargestellt, die im bevorzugten Ausfühnmgsbeispiel als rotierende Waschbürste (1), insbesondere als Seitenbürste ausgebildet ist. Das Tragelement der Waschbürste (1) z.B. eine Welle (2), ist um eine im wesentlichen vertikale Achse drehbar gelagert und motorisch angetrieben. Lagerung und Antrieb entsprechen dem Stand der Technik und bedürfen keiner näheren Darstellung.

Auf der Welle (2) sind beim Ausführungsbeispiel hintereinander mehrere aneinander grenzende Nutringe (8) drehschlüssig befestigt Die Nutringe (8) dienen zur Aufnahme von streifenförmigen Waschelementen (4) und borstenartigen Waschelementen (3), die vorzugsweise in Bündeln (18) angeordnet sind.

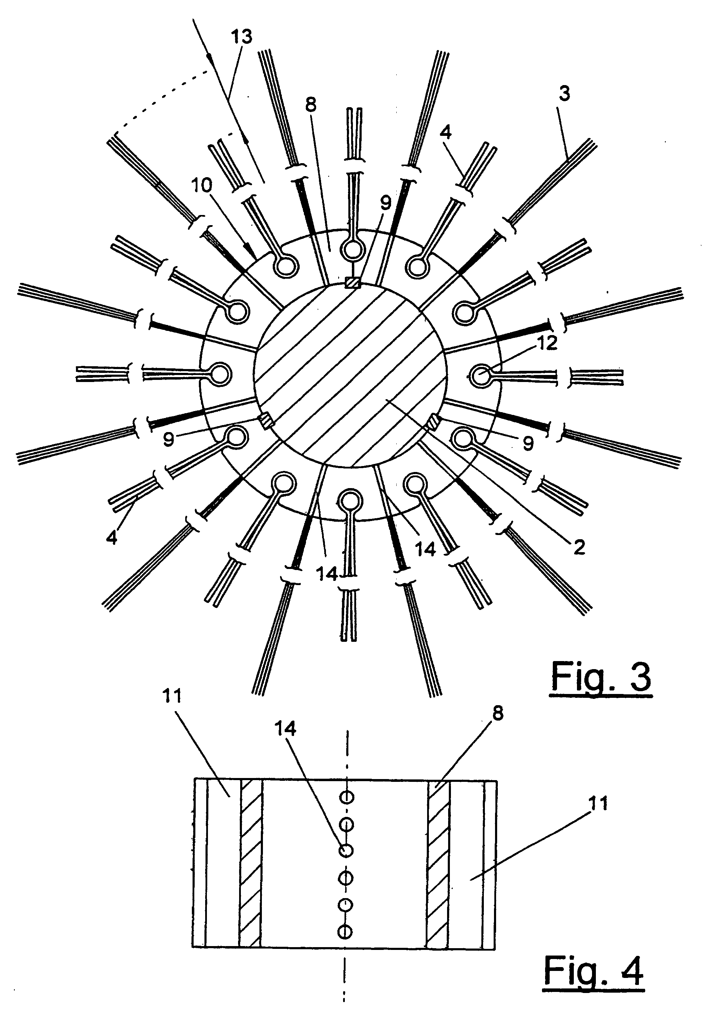

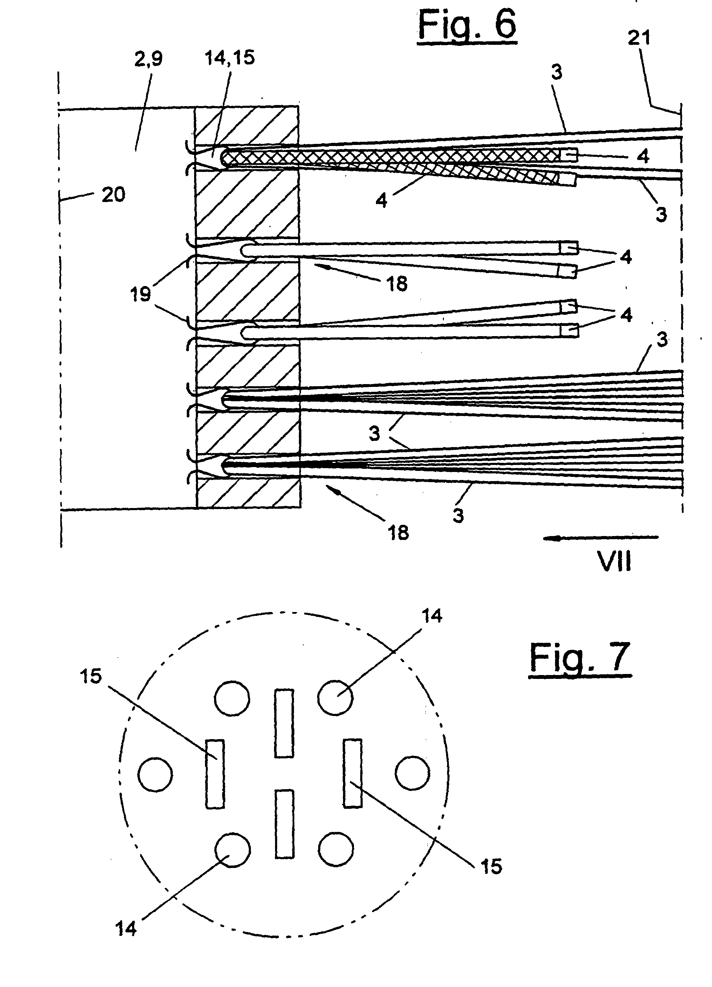

Die Anordnung der borstenartigen Waschelemente (3) und der streifenförmigen Waschelemente (4) erfolgt an den Nutringen (8) in einer kleinräumigen Abwechslung bzw. einer dichten Mischung, wie dies besonders aus Figur 3 und 6 hervorgeht. Die Abwechslung oder wechselweise Positionierung der unterschiedlichen Waschelemente (3,4) kann verschieden sein. Vorzugsweise besteht eine Abwechslung zumindest in Umfangsrichtung der Waschbürste (1). Zusätzlich kann eine Abwechslung in Axialrichtung (20) der Waschbürste (1) vorliegen. In der bevorzugten Ausführung folgen die unterschiedlichen Waschelemente (3,4) unmittelbar aufeinander. Alternativ ist auch ein beliebiger anderer Wechselrhythmus möglich, indem z.B. kleine Gruppen von jeweils zwei Streifen (4) mit Gruppen von jeweils zwei Borstenbündeln (3,18) in Umfangsrichtung abwechseln. Die Gruppen können auch unterschiedlich groß sein.

Die streifenförmigen Waschelemente (4) sind im gezeigten Beispiel als radial abstehende Lappen ausgebildet, die an ihren außenseitigen Rändern Schlitze aufweisen, wodurch schmale Streifen (5) entstehen. Alternative können die Waschelemente (4) auch aus dünnen Einzelstreifen oder Bündeln bzw. Büscheln (18) von Einzelstreifen bestehen.

Die borstenartigen Waschelemente (3) sind länger als die streifenförmigen Waschelemente (4). Im gestreckten Zustand ragen die Spitzen (6) der borstenartigen Waschelemente (3) um den Abstand (13) (vgl. Figur 3) über die Enden der streifenformigen Waschelemente (4) bzw. der geschlitzten Streifen (5) hinaus. Die vorstehenden borstenartigen Waschelemente (3) bestimmen bei der rotierenden und frei entfalteten Waschbürste (1) den Außenumfang (21). Dies hat die Wirkung, dass die überragenden Borstenspitzen (6) als erste in Kontakt mit dem Fahrzeug (16) gelangen und eine intensive Reinigung der Fahrzeugflächen beginnen. Die streifenförmigen Waschelemente (4) folgen nach, insbesondere bei zunehmender Eintauchtiefe der Waschbürste (1) und vollenden in schonenderer Weise die Reinigung.

Die streifenförmigen Waschelemente (4) bestehen aus einem weichen, kompressiblen Material. Sie haben eine Stärke von etwa 2mm bis 3mm und sind in der bevorzugten Ausführungsform aus einem geschlossenporigen Polyäthylen-Schaum hergestellt, der kaum Wasser aufnimmt. Alternativ können sie auch aus einem Fasermaterial, z.B. Textil oder Filz oder einem sonstigen beliebigen geeigneten Werkstoff bestehen.

Die borstenartigen Waschelemente (3) bestehen hingegen aus einem härteren und dünnen fadenförmigen Kunststoffmaterial. Sie sind z.B. aus Polyäthylen mit X-Querschnitt gefertigt Alternativ kommen auch Polyamid, Polypropylen oder andere Werkstoffe in Betracht Die einzelnen Borsten (3) können zu Borstenbüscheln (18) zusammengefasst sein.

Im Ausführungsbeispiel von Figur 1 eistreckt sich die umfangsseitig abwechselnde Anordnung von borstenartigen Waschelementen (3) und streifenförmigen Waschelementen (4) über die gesamte Länge der Waschbürste (1). Die umfangsseitige Verteilung und Positionierung der Waschelemente (3,4) kann dabei über die Bürstenlänge gleich bleiben. Alternativ kann aber auch die in der Zeichnung dargestellte zusätzliche Abwechslung der Waschelemente (3,4) in Axialrichtung vorhanden sein.

Figur 2 zeigt eine Variante, bei der die Waschbürste (1) lediglich an ihrem unteren Bereich (7) abwechselnd angeordnete Gruppen von borstenartigen Waschelementen (3) und Oruppen von streifenförmigen Waschelementen (4) aufweist. Die Abwechslung kann hierbei wiederum in Umfangsrichtung und zusätzlich in Axialrichtung bestehen.

Wenn eine solche Waschbürste (1) gemäß Figur 2 als Seitenbürste in Waschanlagen eingesetzt wird, bearbeiten die unteren Bereiche (7) der Waschbürste (1) speziell die besonders schrnutzbehafteten Zonen des Fahrzeuges, beispielsweise im Türschwellerbereich, optimal, weil durch die abwechselnde Anordnung von Borsten (3) und Streifen (4) sowohl starker Schmutz abgetragen als auch die Lackfläche schonend behandelt wird.

Im Ausführungsbeispiel der Figur 3 ist im Querschnitt eine Waschbürste (1) dargestellt, auf deren Weile (2) mehrere Nutringe (8) über Federn (9) drehschlüssig hintereinander angeordnet sind. Der Übersicht halber ist die Länge der Waschelemente (3,4) verkürzt dargestellt. Am Außenumfang des Nutringes (8) ist eine Vielzahl von axialen Nuten (11) gleichmäßig verteilt angeordnet. Im Beispiel sind zwölf axiale Nuten (11) vorhanden, in welche die gefalteten streifcnfönnigen Waschelemente (4) mittels Fixierstiften (12) eingebracht und gehalten werden.

Im Bereich zwischen den Nuten (11) befinden sich zwölf radiale Öffnungen oder Bohrungen (14), die zur Aufnahme der Borstenbündel (3) bestimmt sind. Das Beispiel der Figur 4 zeigt, dass sechs Bohrungen (14) zur Aufnahme der Borstenbüschel (18) längs einer Mantellinie des Nutringes (8) angeordnet sind, wobei sich über den Umfang verteilt ebenfalls zwölf Reihen solcher Borstenbündel ergeben.

In der Praxis hat sich als vorteilhaft erwiesen, bei einer vertikalen Waschbürste gemäß Figur 2 die unteren vier Nutringe (8) mit den abwechselnd angeordneten Borstenbündeln (3) und streifenförmigen Waschelementen (4) auszustatten. Insoweit ist die Figur 2 nicht maßstabsgerecht anzusehen.

Die Anzahl der radial herausstehenden Bürstenfäden pro Büschel (18) liegt bei 2 x 36, wobei auch diese Angabe nur als Beispiel angesehen werden kann.

Der Abstand (13) zwischen den Spitzen (6) der Borsten (3) und den freien Enden der streifenförmigen Waschelemente (4) beträgt beim Ausführungsbeispiel etwa 5 cm. Die streifenförmigen Waschelemente (4) werden wie beim Stand der Technik (EU-A-0 934 710) doppelt gefaltet und in den Nuten (11) des Nutringes (8) mittels Fixierstiften (12) arretiert Die Spitzen dieser streifenförmigen Waschelemente (4) sind zu etwa 4 mm breiten Streifen (5) geschlitzt

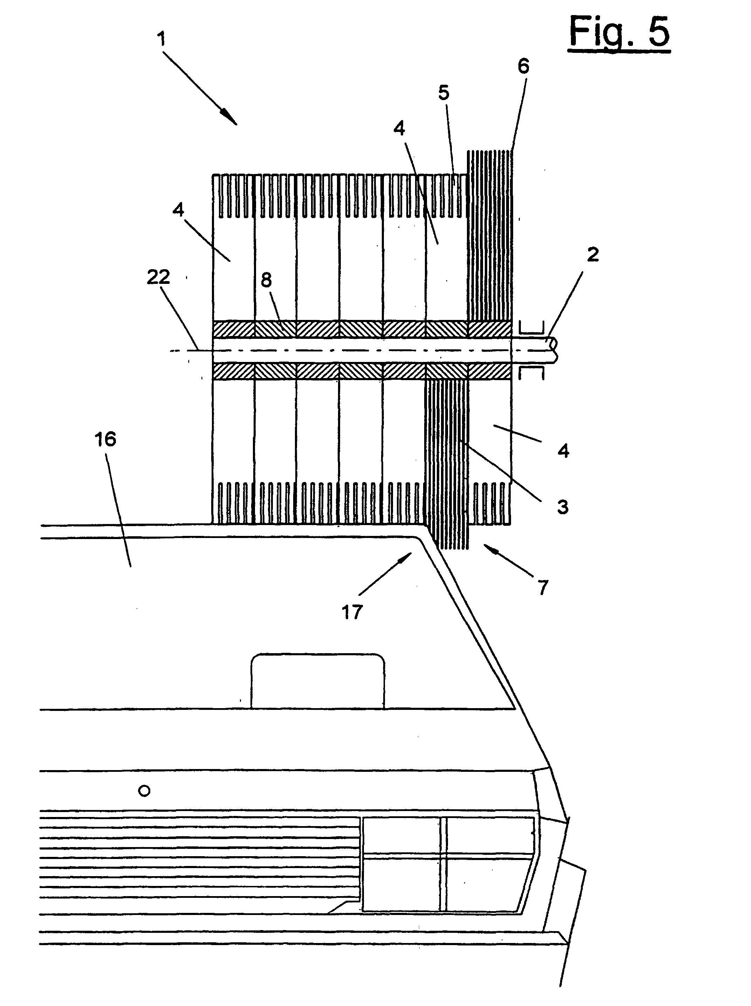

Figur 5 zeigt eine Variante zu Figur 2, wobei die Waschbürste (1) als horizontale Dachbürste ausgebildet ist und sich in Waschstellung an einem Fahrzeug (16) befindet Bei dieser Waschbürste (1) sind an beiden Enden Bereiche (7) mit umfangsseitig abwechselnden Waschelementen (3,4) vorhanden. Die Länge des Bereichs (7) kann beliebig variieren. Sie umfasst im gezeigten Ausfuhrungsbeispiel zwei Nutenringe (8). Bei dieser Anordnung befinden sich die abwechselnden Waschelemente (3,4) an den Randbereichen des Fahlzeugs und insbesondere an den beidseitigen Dachkantenbereichen (17). Hierdurch können die längeren borstenartigen Waschelemente (3) die Dachkantenbereiche (17) besonders gut erreichen und wirksam waschen. Dies ist besonders am Dachübergang und an den geneigten Seitenflächen der Fahrzeugkarosserie von Vorteil. Speziell für Fahrzeuge mit seitlich eingezogenen Dächern wird dabei die Waschleistung der Seitenbürsten unterstützt, welche die schräg liegenden Seitenflächen der Karosserie und insbesondere die Dachkantenbereiche (17) nicht immer optimal erreichen.

Figur 6 und 7 zeigen eine Variante für die Befestigungstechnik und die Positioniennöglichkeiten der verschiedenen Waschelemente (3,4). Figur 6 zeigt hierbei einen Längsschnitt durch einen Nutenring (9) bzw. eine Welle (2). Deren Mantel ist mit mehreren radialen Bohrungen (14,15) versehen, in denen die in Bündeln (18) zusammengefassten borstenartigen Waschelemente (3) und auch die hier ebenfalls als Einzelstreifen vorliegenden und ggf. auch in Bündeln (18) zusammengefassten streifenförmigen Waschelemente (4) befestigt sind. Für die Fixierung werden geeignete Befestigungselemente (19) am innenseitigen Ende der Öffnung oder Bohrung (14,15) verwendet, die z. B. als Krampe oder als Tragschlinge ausgebildet sind und die in Schlaufen der Bündel (18) oder der Waschelemente (3,4) eingreifen.

Figur 6 zeigt hierbei verschiedene Positioniermöglichkeiten. In der obersten Darstellung sind Borsten (3) und Streifen (4) gemeinsam in einer Öffnung (14,15) befestigt. Hierbei können alle oder nur ein Teil der Öffnungen (14,15) des Befestigungsringes (9) oder der Welle (2) in dieser Weise bestückt sein. Diese Variante ist die dichteste Packung der abwechselnd oder gemischt angeordneten Waschelemente (3,4).

Im unteren Bereich von Figur 6 ist eine weitere Variante dargestellt Hierbei sind die Borsten (3) und Streifen (4) getrennt angeordnet und in jeweils eigenen Öffnungen (14,15) befestigt. Wie die Darstellung zeigt, kann hierbei die Wechselfolge anders als in den vorhergehenden Ausführungsbeispielen sein. Es besteht ein Zweierrhythmus, wobei jeweils zwei Streifen (4) oder Streifenbündel (18) mit jeweils zwei Borsten (3) oder Borstenbundeln (18) abwechseln.

Die Wechseifbige ist hier in Axialrichtung der Längsachse (20) dargestellt Sie kann aber zusätzlich oder alternativ auch in Umfangsrichtung bestehen. Die Öffnungen (14,15) können hierbei in gleichmäßigen umfangsseitigen und axialen Reihen angeordnet sein.

Figur 7 zeigt eine Variante bei der Ausgestaltung und Anordnung der Öffnungen (14,15). Die Öffnungen (14) sind als zylindrische Bohrungen ausgebildet und dienen hier in erster Linie der Befestigung von Bündeln (18) von Borsten (3). Die anderen Bohrungen (15) sind im Querschnitt im wesentlichen rechteckig ausgebildet und dienen zur Befestigung einzelner Streifen (4) bzw. kleiner Streifenbündel (18). Wie die Anordnung von Figur 7 verdeutlicht, sind vier für die Streifen (4) vorgesehene Öffnungen (15) im Kreuz angeordnet und außenseitig von sechs zylindrisches Bohrungen (14) für die Borstenbündel (18) umgeben. Dieser Positionierrhythmus kann sich entsprechend in Umfangsrichtung und/oder in Axialrichtung wiederholen.

Abwandlungen der gezeigten Ausführungsformen sind in verschiedener Weise möglich. Zum einen können die Materialien und die Verteilung der Waschelemente (3,4) beliebig variieren. In der gezeigten Ausführungsform ist die umfangsseitige Verteilung an jedem Nutenring (8) gleich. Sie kann alternativ auch von Nutenring zu Nutenring variieren. Hierbei kann sich nicht nur die umfangsseitige Verteilung und der Wechselrhythmus, sondern auch die Zahl der verschiedenen Waschelemente (3,4) ändern. Die vorerwähnte axiale Abwechslung der Waschelemente (3,4) ergibt sich bei der gezeigten Ausfuhnmgsform durch eine gegenseitige Verdrehung der Nutenringe (8) um jeweils eine umfangsseitige Wechselteilung der Waschelemente (3,4). Alternativ kann auch die Waschelementebestückung an den Nutenringen (8) entsprechend verdreht sein.

Ferner kann die Befestigung der Waschelemente (3,4) am Tragelement (2) beliebig variieren. Statt der Notenringe (8) können auch andere Befestigungselemente zum Einsatz kommen, die z. B. aus starren Halbschalenelementen, elastischen Manschetten oder dergleichen bestehen. Die Waschelemente (3,4) können auch direkt an der Welle (2) oder einem anderen Tragelement befestigt werden. Statt Nutenbefestigungen können auch beliebige andere Verbindungstechniken eingesetzt werden.

In einer weiteren Abwandlung müssen die Wascheinrichtungen (1) auch nicht als rotierende Waschbürsten mit einer starren Welle (2) und einer einzigen Drehachse ausgebildet sein. Sie können auch eine beliebig andere Gestaltung haben und aus umlaufenden Bändern mit außenseitigen Waschelementen (3,4) oder beliebigen anderen Konstruktionen bestehen. Hierbei können sich auch mehrere Dreh- oder Bewegungsachsen ergeben.

### BEZUGSZEICHENLISIE

- 1: Wascheinrichtung, Waschbürste
- 2: Tragelement, Welle
- 3: Waschelement, Borsten
- 4: Waschelement, Streifen
- 5: geschlitzte Streifen
- 6: Spitzen der Borsten
- 7: unterer Bereich der Waschbürste
- 8: Nutring, Befestigungsring
- 9: Feder
- 10: Umfang
- 11: Nut
- 12: Fixierstift
- 13: Abstand
- 14: radiale Öffnung, Bohrung
- 15: radiale Öffnung, Bohrung
- 16: Fahrzeug
- 17: Dachkantenbereich
- 18: Bündel, Büschel
- 19: Befestigungselement
- 20: Längsachse, Axialrichtung
- 21: Außenumfang

## Patentansprüche

1. Wascheinrichtung, insbesondere Waschbürste, für Fahrzeugwaschanlagen, welche umlaufend oder rotierend gelagert und angetrieben ist und am Umfang mehrere im wesentlichen quer abstehende borstenartige und streifenförmige Waschelemente (3,4) aufweist, die in Umfangsrichtung und/oder in Axialrichtung abwechselnd angeordnet sind, **dadurch gekennzeichnet, daß** die borstenartigen Waschelemente (3) eine größere Länge als die streifenförmigen Waschelemente (4) aufweisen und die borstenartigen Waschelemente (3) härter als die streifenförmigen Waschelemente (4) sind.

2. Wascheinrichtung nach Anspruch 1, **dadurch gekennzeichnet, daß** die streifenförmigen Waschelemente (4) aus einem Kunststoffschaum, vorzugsweise einem geschlossenporigen Polyethylenschaum, oder aus einem Fasermaterial, vorzugsweise Textil oder Filz, bestehen.

3. Wascheinrichtung nach einem der vorherigen Ansprüche, **dadurch gekennzeichnet, daß** die streifenförmigen Waschelemente (4) aus dünnen Einzelstreifen oder aus Lappen mit Schlitzen (5) bestehen.

4. Wascheinrichtung nach einem der vorherigen Ansprüche, **dadurch gekennzeichnet, daß** die Waschelemente (3,4) an Nutringen (8) befestigt die borstenartigen Waschelemente (3) als Borstenbüschel (18) ausgebildet sind und aus einem fadenförmigen Kunststoffimaterial, vorzugsweise aus Polyäthylen, Polyamid oder Polypropylen, bestehen.

5. Wascheinrichtung nach einem der vorherigen Ansprüche, **dadurch gekennzeichnet, daß** die borstenartigen und streifenförmigen Waschelemente (4) in einem unteren Teilbereich (7) einer um eine im wesentlichen vertikale Achse rotierenden Waschbürste (1) angeordnet sind.

6. Wascheinrichtung nach einem der vorherigen Ansprüche, **dadurch gekennzeichnet, daß** die borstenartigen und streifenförmigen Waschelemente (4) in zwei randseitigen Teilbereichen (7) einer um eine im wesentlichen horizontale Achse rotierenden Waschbürste (1) angeordnet sind.

7. Wascheinrichtung nach einem der vorherigen Ansprüche, **dadurch gekennzeichnet, daß** die Waschelemente (3,4) an Nutringen (8) befestigt sind, welche drehschlüssig an einem Tragelement (2) angeordnet sind.

8. Wascheinrichtung nach einem der vorherigen Ansprüche, **dadurch gekennzeichnet, daß** die Waschelemente (3,4) an den unteren Nutringen (8), vorzugsweise an den untersten vier Nutringen (8) der Waschbürste (1) befestigt sind.

9. Wascheinrichtung nach einem der vorherigen Ansprüche, **dadurch gekennzeichnet, daß** am einzelnen Nutring (8) über den Umfang verteilt zwölf Reihen von borstenartigen Waschelementen (3) und zwölf Reihen von streifenförmigen Waschelementen (4) in gleichmäßiger Abwechslung angeordnet sind.

10. Wascheinrichtung nach einem der vorherigen Ansprüche, **dadurch gekennzeichnet, daß** die einzelne Borstenreihe (3) sechs Borstenbüschel (18) mit beispielsweise je 36 Fäden aufweist.

11. Wascheinrichtung nach einem der vorherigen Ansprüche, **dadurch gekennzeichnet, daß** die borstenartigen Waschelemente (3) im gestreckten Zustand etwa 5 cm länger als die streifenförmigen Waschelemente (4) sind.

12. Wascheinrichtung nach einem der vorherigen Ansprüche, **dadurch gekennzeichnet, daß** die borstenartigen Waschelemente (3) in radialen Öffnungen (14) der Welle (2) oder des Nutringes (8) befestigt und zwischen axialen Nuten (11) angeordnet sind, die zur Aufnahme der streifenförmigen Waschelemente (4) bestimmt sind.

13. Wascheinrichtung nach einem der vörherigen Ansprüche, **dadurch gekennzeichnet, daß** die borstenartigen Waschelemente (3) und die streifenförmigen Waschelemente (4) jeweils in Bündeln (18) oder einzeln angeordnet und umfangsseitig sowie axial gleichmäßig verteilt sind, wobei die Bündel in eigenen radialen Öffnungen (14,15) der Welle (2) oder des Nutringes (8) befestigt sind.

14. Wascheinrichtung nach einem der vorherigen Ansprüche, **dadurch gekennzeichnet, daß** die borstenartigen Waschelemente (3) und die streifenförmigen Waschelemente (4) gemeinsamen radialen Öffnungen (14,15) der Welle (2) oder des Nutringes (8) befestigt sind.

## Claims

1. Washing device, in particular washing brush, for vehicle washing installations, which is mounted and driven so that it revolves or rotates and at its circumference exhibits a plurality of essentially transversely projecting bristle-like and strip-shaped washing elements (3, 4) which are arranged in alternation in the circumferential direction and/or in the axial direction, **characterised in that** the bristle-like washing elements (3) have a greater length than the strip-shaped washing elements (4) and the bristle-like washing elements (3) are harder than the strip-shaped washing elements (4).

2. Washing device according to claim 1, **characterised in that** the strip-shaped washing elements (4) are made of a plastic foam, preferably a closed-pore polyethylene foam, or of a fibre material, preferably textile or felt.

3. Washing device according to one of the preceding claims, **characterised in that** the strip-shaped washing elements (4) are made of thin individual strips or of flaps with slits (5).

4. Washing device according to one of the preceding claims, **characterised in that** the washing elements (3, 4) are fastened to slotted rings (8), the bristle-like washing elements (3) are embodied as bundles of bristles (18) and made of a filamentary plastic material, preferably of polyethylene, polyamide or polypropylene.

5. Washing device according to one of the preceding claims, **characterised in that** the bristle-like and strip-shaped washing elements (4) are arranged in a lower part region (7) of a washing brush (1) rotating about an essentially vertical axis.

6. Washing device according to one of the preceding claims, **characterised in that** the bristle-like and strip-shaped washing elements (4) are arranged in two part regions (7) at the edge of a washing brush (1) rotating about an essentially horizontal axis.

7. Washing device according to one of the preceding claims, **characterised in that** the washing elements (3, 4) are fastened to slotted rings (8) which are arranged on a carrying element (2) so that they cannot rotate.

8. Washing device according to one of the preceding claims, **characterised in that** the washing elements (3, 4) are fastened to the lower slotted rings (8), preferably to the bottom four slotted rings (8) of the washing brush (1) .

9. Washing device according to one of the preceding claims, **characterised in that** twelve rows of bristle-like washing elements (3) and twelve rows of strip-shaped washing elements (4) are arranged in uniform alternation distributed around the circumference on the individual slotted ring (8).

10. Washing device according to one of the preceding claims, **characterised in that** the individual row of bristles (3) exhibits six bundles of bristles (18) each with thirty-six filaments for example.

11. Washing device according to one of the preceding claims, **characterised in that** when extended, the bristle-like washing elements (3) are approximately 5 cm longer than the strip-shaped washing elements (4).

12. Washing device according to one of the preceding claims, **characterised in that** the bristle-like washing elements (3) are fastened in radial openings (14) of the shaft (2) or the slotted ring (8) and arranged between axial slots (11) which are designed to receive the strip-shaped washing elements (4).

13. Washing device according to one of the preceding claims, **characterised in that** the bristle-like washing elements (3) and the strip-shaped washing elements (4) are in each case arranged in bundles (18) or individually and distributed uniformly on the circumference and axially, the bundles being fastened in their own radial openings (14, 15) of the shaft (2) or the slotted ring (8).

14. Washing device according to one of the preceding claims, **characterised in that** the bristle-like washing elements (3) and the strip-shaped washing elements (4) are fastened in common radial openings (14, 15) of the shaft (2) or the slotted ring (8).

## Revendications

1. Dispositif de lavage, notamment brosse de lavage, pour installations de lavage de véhicules, qui est monté à palier, et entraîné, suivant un mouvement de révolution ou de rotation et comprend, à la périphérie, plusieurs éléments de lavage (3, 4) du type brosse et en forme de lamelle qui se dressent d'une manière essentiellement transversale et qui sont disposés d'une manière alternée suivant la direction circonférentielle et/ou suivant la direction axiale, **caractérisé en ce que** les éléments de lavage du type brosse (3) ont une longueur plus grande que les éléments de lavage en forme de lamelle (4) et les éléments de lavage du type brosse (3) sont plus durs que les éléments de lavage en forme de lamelle (4).

2. Dispositif de lavage suivant la revendication 1, **caractérisé en ce que** les éléments en forme de lamelle (4) sont en une matière plastique cellulaire, de préférence une mousse de polyéthylène à pores fermés ou en une matière de fibre, de préférence textile ou feutre.

3. Dispositif de lavage suivant l'une des revendications précédentes, **caractérisé en ce que** les éléments de lavage en forme de lamelle (4) sont constitués par des lamelles individuelles minces ou par des bavettes comportant des fentes (5).

4. Dispositif de lavage suivant l'une des revendications précédentes, **caractérisé en ce que** les éléments de lavage (3, 4) sont fixés sur des anneaux à gorge (8) les éléments de lavage du type brosse (3) sont réalisés sous forme de touffes de brosse (18) et sont en une matière plastique en forme de fil, de préférence en polyéthylène, polyamide ou polypropylène.

5. Dispositif de lavage suivant l'une des revendications précédentes, **caractérisé en ce que** les éléments de lavage du type brosse et en forme de lamelle (4) sont disposés dans une zone partielle inférieure (7) d'une brosse de lavage (1) tournant autour d'un axe essentiellement vertical.

6. Dispositif de lavage suivant l'une des revendications précédentes, **caractérisé en ce que** les éléments de lavage du type brosse et en forme de lamelle (4) sont disposés dans deux zones partielles côté bord (7) d'une brosse de lavage (1) tournant autour d'un axe essentiellement horizontal.

7. Dispositif de lavage suivant l'une des revendications précédentes, **caractérisé en ce que** les éléments de lavage (3, 4) sont fixés à des anneaux à gorge (8) qui sont disposés en étant calés en rotation sur un élément porteur (2).

8. Dispositif de lavage suivant l'une des revendications précédentes, **caractérisé en ce que** les éléments de lavage (3, 4) sont fixés aux anneaux à gorge (8) inférieurs, de préférence aux quatre anneaux à gorge (8) les plus inférieurs, de la brosse de lavage (1).

9. Dispositif de lavage suivant l'une des revendications précédentes, **caractérisé en ce que** douze rangées d'éléments de lavage du type brosse (3) et douze rangées d'éléments de lavage en forme de lamelle (4) sont disposés suivant une alternance régulière, sur l'anneau à gorge (8) respectif, en étant répartis suivant la circonférence.

10. Dispositif de lavage suivant l'une des revendications précédentes, **caractérisé en ce que** la rangée de brosse (3) individuelle comprend six touffes de brosse (18) comportant par exemple chacune 36 fils.

11. Dispositif de lavage suivant l'une des revendications précédentes, **caractérisé en ce que** les éléments de lavage du type de brosse (3) sont, à l'état tendu, plus longs d'approximativement 5 cm que les éléments de lavage en forme de lamelle (4).

12. Dispositif de lavage suivant l'une des revendications précédentes, **caractérisé en ce que** les éléments de lavage du type brosse (3) sont fixés dans des ouvertures radiales (14) de l'arbre (2) ou de l'anneau à gorge (8) et sont disposés entre des rainures axiales (11) qui sont prévues pour recevoir les éléments de lavage en forme de lamelle (4).

13. Dispositif de lavage suivant l'une des revendications précédentes, **caractérisé en ce que** les éléments de lavage du type brosse (3) et les éléments de lavage en forme de lamelle (4) sont disposés respectivement en faisceaux (18) ou individuellement et sont répartis d'une manière uniforme suivant la périphérie aussi bien qu'axialement, les faisceaux étant fixés dans des ouvertures radiales (14, 15) propres de l'arbre (2) ou de l'anneau à gorge (8).

14. Dispositif de lavage suivant l'une des revendications précédentes, **caractérisé en ce que** les éléments de lavage du type brosse (3) et les éléments de lavage en forme de lamelle (4) sont fixés des ouvertures radiales (14, 15) communes de l'arbre (2) ou de l'anneau à gorge (8).
